# FASCICULE DE BREVET EUROPEEN

(11) **EP 2 199 235 B1**
(45) Date de publication et mention de la délivrance du brevet: **26.10.2011**
(21) Numéro de dépôt: 09306250.3
(22) Date de dépôt: 17.12.2009
(51) Int. Cl.: B65G 39/12, F16P 1/00

(54) **Station de support d'un convoyeur a bande**
Hilfsstation eines Bandförderers
Support station for a conveyor belt

(30) Priorité: 22.12.2008 FR 0858901
(43) Date de publication de la demande: 23.06.2010
(73) Titulaire: Brunone, René, 27950 Saint Marcel (FR)
(72) Inventeur: Brunone, René, 27950 Saint Marcel (FR)
(74) Mandataire: Blot, Philippe Robert Emile

(56) Documents cités:
- EP-A- 0 416 201
- DE-A1- 19 610 624
- FR-A- 2 782 991

## Description

L'invention concerne en général les convoyeurs à bande. Plus précisément, l'invention concerne une station de support d'un convoyeur à bande mobile selon le préambule de la revendication 1. Une telle station est décrit dans le document EP-A-0 416 201.

Une station de support est décrite dans la demande déposée sous le numéro FR 06 03579. La protection anti-coincement est un profilé cintré pour épouser la courbure du berceau de guidage. Le profilé comporte une lame longiligne et une gaine entourant la lame longiligne. La protection est fixée au châssis par l'intermédiaire de platines vissées sous les pieds du châssis.

Baisser les coûts de fabrication est un souci constant dans l'industrie.

Dans ce contexte, l'invention vise à proposer une station de support qui soit plus économique.

A cette fin, l'invention porte sur une station de support selon la revendication 1. **caractérisée en ce que** la protection comprend des premier et second profilés longitudinaux présentant respectivement des première et seconde sections

La station de support peut également présenter une ou plusieurs des caractéristiques ci-dessous, considérées individuellement ou selon toutes les combinaisons techniquement possibles :
- les premier et second profilés sont en un matériau plastique ;
- les premier et second profilés sont disposés respectivement vers l'extérieur et vers le centre de la station de support, et comportent des faces tournées vers la bande respectivement relativement plus large et relativement moins large ;
- les faces tournées vers la bande des premier et second profilés sont séparées du rouleau par des interstices respectivement relativement plus étroit et relativement plus large ;
- la protection comprend une âme métallique longitudinale, les profilés étant clipsés sur l'âme métallique ;
- chaque profilé présente une face tournée vers le rouleau et un logement de réception de l'âme métallique ouvert sur la face tournée vers le rouleau ;
- le châssis comprend deux encoches de support de la protection disposées longitudinalement de part et d'autre de la protection, les encoches étant délimitées chacune par un bord périphérique ouvert, les parties d'extrémité opposées de l'âme étant engagées dans les encoches ;
- au moins une des parties d'extrémité de l'âme fait saillie hors de l'encoche et est pliée par rapport à la direction longitudinale ;
- l'âme métallique est un fer plein de section plate ;
- le berceau comporte au moins un rouleau central et deux rouleaux d'extrémité disposés de part et d'autre du rouleau central, les rouleaux, étant disposés dans le prolongement les uns des autres, la station comportant pour chacun des deux rouleaux d'extrémité une protection munie de deux profilés longitudinaux de sections différentes l'une de l'autre, et pour chaque rouleau central une protection munie d'un seul profilé.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue schématique de profil d'un convoyeur à bande supporté par des stations à rouleaux conforment à l'invention ;
- la figure 2 est une vue de face de la station de support de la figure 1 ;
- la figure 3 est une vue en perspective de la station de support de la figure 2, l'un des rouleaux n'étant pas représenté ;
- les figures 4 et 5 sont des vues en coupe de la station de la figure 2, considérées respectivement selon l'incidence des flèches IV et V.

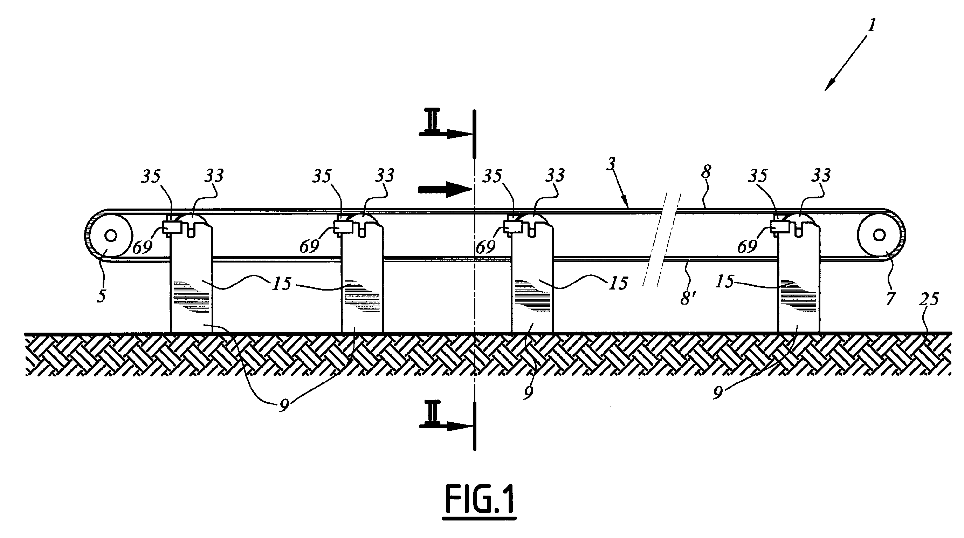

Le convoyeur 1 représenté sur la figure 1 est destiné par exemple au transport de minerais issus d'une carrière. Il comporte une bande transporteuse 3 repliée en boucle et engagée à ses extrémités autour de deux rouleaux 5 et 7 de retournement. L'un des deux rouleaux 5 est moteur pour assurer l'entraînement de la bande 3, définissant ainsi le côté amont de la bande 3. La boucle est ainsi divisée en un tronçon supérieur 8 de transport du minerai et un tronçon inférieur 8' de retour.

La bande 3, le long du tronçon supérieur 8, est supportée, sur sa longueur par plusieurs stations 9 assurant le support et le guidage de la bande 3. Les stations 9 sont par exemple toutes identiques.

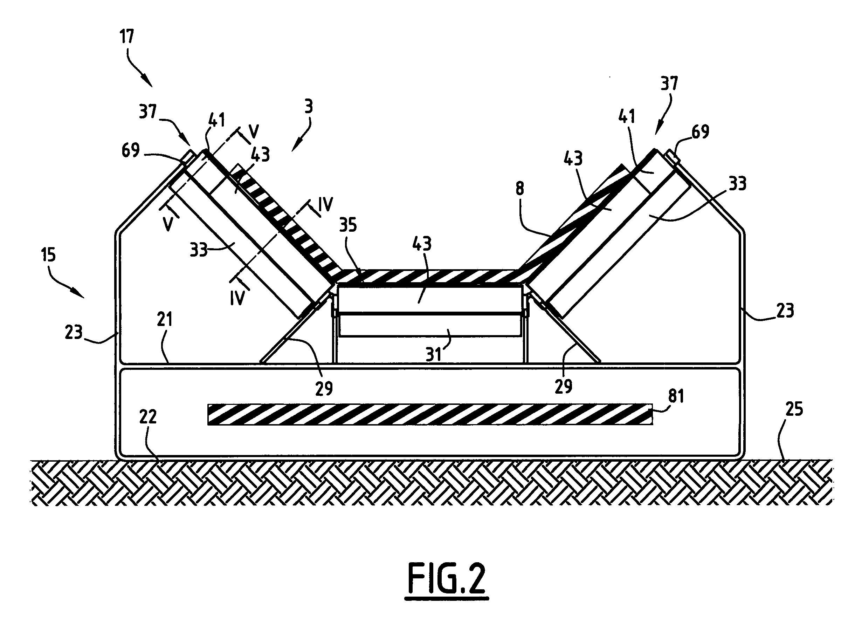

Comme le montre la figure 2, chaque station 9 comprend un châssis métallique d'appui 15 et un berceau 17 de support et de guidage de la bande 3. Le châssis 15 comprend essentiellement des poutres transversales supérieure 21 et inférieure 22, et deux pieds 23 d'appui sur le sol 25, de chaque côté de la bande 3. Les poutres transversales 21 et 22 relient les deux pieds 23. Le châssis 15 est posé directement sur le sol 25, par la poutre inférieure 22.

Les poutres supérieure et inférieure 21 et 22 sont espacées verticalement, le tronçon inférieur 8' de la bande 3 passant entre les deux poutres.

Le châssis 15 comprend deux pattes 29 de support de rouleaux. Les pattes 29 sont formées de lames métalliques pliées, dont les extrémités sont fixées à la poutre transversale supérieure 21 du châssis 15.

Un rouleau central inférieur horizontal 31 et deux rouleaux latéraux inclinés 33 sont montés mobiles en rotation entre les pattes de support 29 et les pieds 23 du châssis 15. Ces rouleaux 31 et 33 s'étendent dans un même plan vertical et sont propres à recevoir la bande 3 et à déformer celle-ci en forme d'auge.

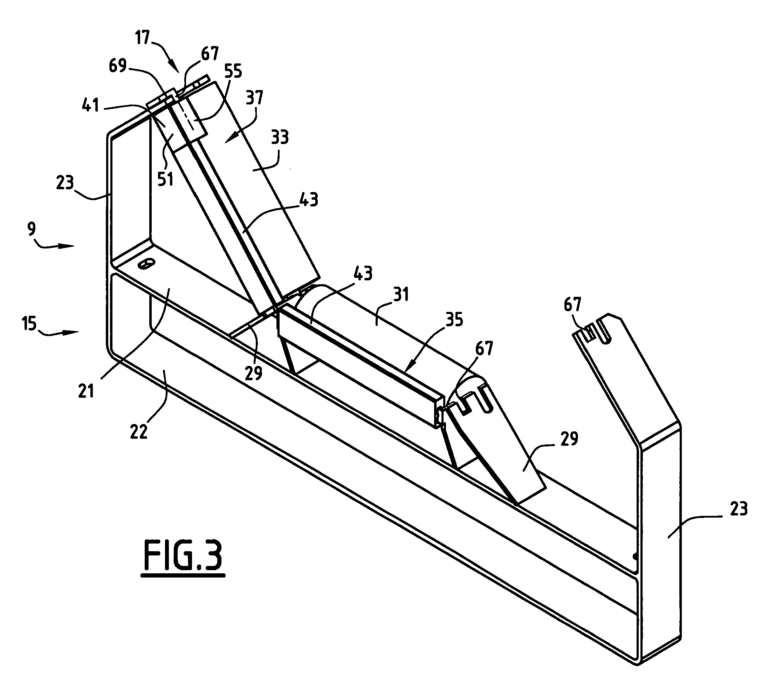

Du côté amont de la station de support 9, des protections 35, 37 anti-coincement, visible sur la figure 3, masquent l'angle dit rentrant, formé par la bande 3 et chaque rouleau de support 31 et 33.

Les protections anti-coincements 37 des rouleaux latéraux sont différentes de la protection anti-coincement 35 du rouleau central.

Chacune des deux protections 37 comprend essentiellement une âme centrale métallique 39 et des premier et second profilés 41 et 43 clipsés sur l'âme centrale.

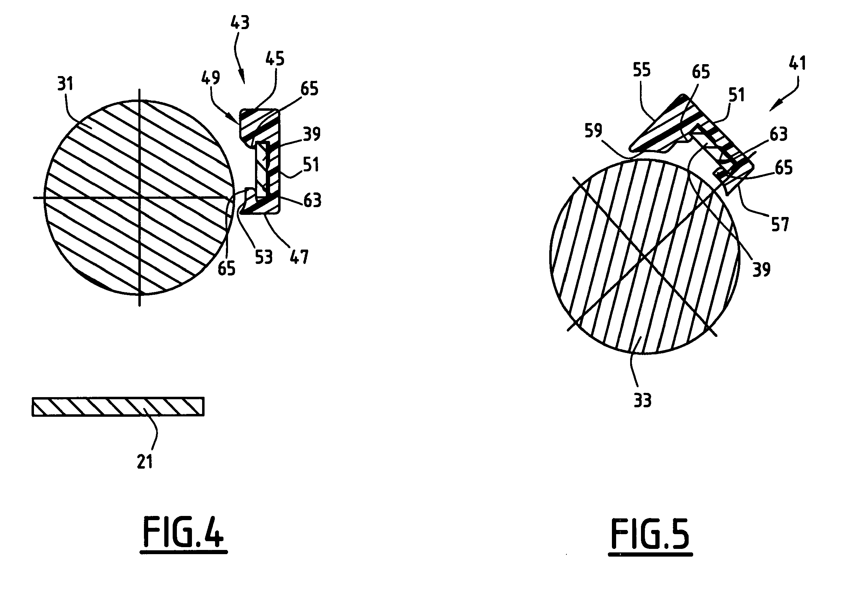

L'âme centrale 39 est un fer plein, de section plate, comme visible sur les figures 4 et 5.

Les profilés 41 et 43 sont en un matériau plastique, par exemple en polyéthylène. Ils présentent respectivement des première et seconde sections différentes l'une de l'autre. La section du premier profilé est représentée sur la figure 5, et la section du second profilé est représentée sur la figure 4.

Chaque protection est disposée le long du rouleau correspondant, et est allongée longitudinalement sensiblement parallèlement à la génératrice du rouleau.

Chaque profilé 41, 43 présente, perpendiculairement à la direction longitudinale, une section constante.

Le profilé 43 présente, dans un plan perpendiculaire à la direction longitudinale, une section sensiblement rectangulaire, comme visible sur la figure 4. Il est délimité par des faces 45, 47, 49 et 51. Les faces 45 et 47 sont respectivement tournées vers la bande et à l'opposé de la bande. Les faces 49 et 51 sont respectivement tournées vers le rouleau 33 et à l'opposé du rouleau. La face 49 présente une zone inférieure 53 légèrement arquée, de façon à épouser la courbure du rouleau. La zone 53 jouxte la face 47. Elle est faiblement écartée du rouleau 33. La zone de la face 49 jouxtant la face 45 est plane, et est plus fortement écartée du rouleau 33 que la zone 53.

Comme illustré sur la figure 5, le profilé 41 est délimité par quatre faces, respectivement 55, 57, 59 et 61. Les faces 55 et 57 sont tournées respectivement vers le tronçon 8 de la bande et à l'opposée du tronçon 8. Les faces 59 et 61 sont tournées respectivement vers le rouleau et à l'opposée du rouleau. La face 55 est relativement plus large que la face 57. On entend ici par largeur la taille des faces dans un plan perpendiculaire à la direction longitudinale. De même, la face 55 est plus large que la face 45 tournée vers le tronçon 8 du profilé 43.

En conséquence, la face 55 est séparée du rouleau 33 par un interstice relativement plus étroit que l'interstice séparant la face 45 dudit rouleau 33.

La face 59 est arquée à la fois dans la zone jouxtant la face 55 et à la fois dans la zone jouxtant la face 57. Elle épouse le contour du rouleau 33 sensiblement sur toute sa superficie. Ainsi, la face 59 épouse la forme du rouleau 33 sur un secteur angulaire de ce rouleau plus grand que la face 49 du profilé 43.

La zone de la face 59 jouxtant la face 55 est séparée du rouleau par un interstice sensiblement égal à celui séparant le rouleau de la zone jouxtant la face 57.

Les profilés 41 et 43 sont disposés côte à côte le long de l'âme 39. Le profilé 41 est disposé du côté du pied 23, le profilé 43 étant disposé du côté de la patte 29. Ensemble, ils s'étendent sensiblement sur toute la longueur du rouleau 33.

Les profilés 41 et 43 sont fixés à l'âme 39 par clipsage. Ils ne sont pas directement fixés au pied 23 ni à la patte de support 29. Ils ne sont pas directement fixés l'un à l'autre.

De manière à permettre le clipsage sur l'âme métallique, chacun des profilés présente sur sa face tournée vers le rouleau un logement 63 de réception de ladite âme. Le logement 63 présente une forme conjuguée de celle de l'âme 39. Le logement 63 est ouvert au niveau de la face 59, 49 tournée vers le rouleau. L'ouverture est de forme adaptée pour permettre l'engagement de l'âme 39 à l'intérieur du logement 63.

De part et d'autre de l'ouverture du logement sont formés des reliefs 65, déformables élastiquement, de blocage de l'âme 39 à l'intérieur du logement 63.

Selon un autre aspect de l'invention, indépendant des aspects précédents, le pied 23 et la patte 29 présentent chacun une encoche 67, des parties d'extrémité opposées 69 de l'âme métallique étant engagées dans les encoches en vue de fixer la protection au châssis. Les encoches 67 sont chacune délimitées par un bord périphérique ouvert vers le haut. Elles sont alignées longitudinalement l'une avec l'autre.

La partie d'extrémité 69 de l'âme engagée dans l'encoche du pied 23 fait saillie hors de cette encoche. La partie saillante est pliée par rapport à la direction longitudinale, par exemple perpendiculairement à celle-ci.

Les deux parties d'extrémité 69 sont soudées, l'une au pied 23 et l'autre à la patte 29.

La protection 35 du rouleau 31 est légèrement différente des protections 37 associées aux rouleaux d'extrémités 33.

La protection 35 du rouleau central comporte une âme centrale métallique et un seul profilé. L'âme centrale est un fer similaire à celui des protections 37 des rouleaux latéraux. Le profilé est similaire au profilé 43 des rouleaux latéraux. Il s'étend sur toute la longueur longitudinale du rouleau 31.

Les parties d'extrémité de l'âme métallique sont engagées dans des encoches similaires aux encoches 67 décrites ci-dessus, ménagées dans les deux pattes 29 disposées de part et d'autre du rouleau central 31. Les parties d'extrémité de l'âme métallique ne sont pas pliées. Elles sont engagées dans les encoches 67 et soudées aux deux pattes 29.

Le montage des différentes protections sur le châssis de support peut être effectué très simplement. La protection 35 du rouleau central est montée en soulevant d'abord le tronçon 8 de la bande, et en engageant les deux parties d'extrémité opposées de l'âme centrale dans les encoches 67 prévues sur les deux pattes de support 29 pour la réception de l'âme métallique. Les deux parties d'extrémité sont ensuite soudées sur les pattes 29.

Les protections 35 des rouleaux latéraux 33 sont montées chacun en soulevant le tronçon 8 de la bande, en engageant une partie d'extrémité de l'âme métallique de la protection dans l'encoche 67 de la patte de support 29, puis en engageant l'autre partie d'extrémité de l'âme métallique dans l'encoche 67 du pied 23. Cette dernière partie d'extrémité fait alors saillie vers l'extérieur du support par rapport à l'encoche 67, selon la direction longitudinale. La partie saillante est ensuite pliée à l'aide d'une masse, sensiblement perpendiculairement à la direction longitudinale. Les deux parties d'extrémité 69 de l'âme métallique sont ensuite soudées l'une sur la patte 29 et l'autre sur le pied 23.

La station de support décrite ci-dessus présente de multiples avantages.

Du fait que la protection comprend des premier et second profilés longitudinaux présentant respectivement des première et seconde sections différentes l'une de l'autre, il est possible d'avoir le long d'un même rouleau des zones où la protection anti-coincement est plus complète, et des zones où la protection anti-coincement est moins complète. De préférence, on renforce la protection anti-coincement à proximité des pieds du châssis de support, c'est-à-dire dans les zones où les interventions des opérateurs sont les plus fréquentes.

Ainsi, dans la zone où les opérateurs n'interviennent que rarement, il est possible d'utiliser un profilé de plus petite section. On gagne ainsi de la matière, de telle sorte que la station de support est de fabrication plus économique.

Les premier et second profilés peuvent être fabriqués très commodément en un matériau plastique, par exemple du polyéthylène, notamment par extrusion.

Il est avantageux de prévoir que le profilé situé vers l'extérieur de la station de support comporte une face tournée vers la bande plus large que celui situé vers le centre de la station de support. En effet, le profilé situé vers le centre de la station de support est entièrement recouvert par la bande, de telle sorte que le risque qu'un opérateur introduise un doigt entre le rouleau et le profilé par le haut est extrêmement réduit. En revanche, comme le montre la figure 2, le profilé situé vers l'extérieur du support n'est pas entièrement recouvert par la bande. Il existe donc un risque plus important qu'un opérateur glisse un doigt entre la face dudit profilé tournée vers la bande et le rouleau. En conséquence, on prévoit un interstice plus étroit entre le rouleau et la face tournée vers la bande du profilé situé à l'extérieur et un interstice plus large entre le rouleau et la face tournée vers la bande du profilé situé vers le centre de la station de support.

Comme indiqué plus haut, selon un second aspect de l'invention indépendant du premier, chaque protection est obtenue de manière particulièrement économique en clipsant les profilés sur l'âme métallique. L'assemblage de l'âme et des profilés est particulièrement facile. Le clipsage est réalisé de manière extrêmement simple et rapide du fait que le logement de réception de l'âme métallique est ouvert sur une des faces de chaque profilé.

Selon encore un autre aspect de l'invention indépendant des deux premiers aspects, le montage de chaque protection sur le châssis de support est particulièrement facile, du fait que les parties d'extrémité de l'âme métallique sont engagées dans des encoches ménagées sur le châssis, les encoches étant délimitées chacune par un bord périphérique ouvert. Le blocage de la protection est particulièrement efficace, du fait qu'une des parties d'extrémité de l'âme métallique est pliée par rapport à la direction longitudinale. Ce pliage est obtenu de manière très commode à l'aide d'une masse, après engagement de l'âme métallique dans les encoches. Le pliage est favorisé par le fait que l'âme métallique est un fer de section plate.

La station de support décrite ci-dessus peut présenter de multiples variantes.

Le berceau de support peut comporter un seul rouleau, la station de support comportant alors une seule protection anti-coincement. Dans ce cas, il est avantageux de prévoir que la protection comporte trois profilés, deux profilés de plus grande section aux extrémités tels que le profilé 41 décrit ci-dessus, et un profilé de plus petite section au centre, tel que le profilé 43 décrit ci-dessus.

Le berceau peut encore comporter deux rouleaux, et deux protections. Dans ce cas, chacune des deux protections comporte un profilé de plus grande section vers l'extérieur du support, et un profilé de plus petite section vers le centre de support.

Le berceau peut comporter plus de trois rouleaux, par exemple quatre, cinq ou plus de cinq rouleaux. Dans ce cas, les protections associées à tous les rouleaux centraux ne comportent de préférence qu'un seul profilé, du type du profilé 43 de plus petite section décrit ci-dessus.

En tout état de cause, la protection associée à n'importe quel rouleau peut comporter deux, trois ou plus de trois profilés de sections différentes les unes des autres, en fonction des besoins.

Les profilés peuvent être réalisés dans toutes sortes de matériaux, et ne sont pas nécessairement réalisés en un matériau plastique.

L'âme de chaque protection n'est pas nécessairement métallique.

Les profilés de plus grande et de plus petite section peuvent présenter toutes sortes de formes, et ne présentent pas nécessairement les sections représentées aux figures 4 et 5.

## Revendications

1. Station de support d'un convoyeur à bande mobile, la station de support (9) comprenant :
- un berceau (17) de support de la bande (3), le berceau (17) comportant au moins un rouleau (31, 33) de guidage et de support de la bande (3);
- un châssis (15) de support du ou de chaque rouleau (31, 33);
- au moins une protection anti-coincement (35, 37) fixée au châssis (15), la protection (35, 37) étant disposée le long d'au moins un des rouleaux (31, 33) et présentant une forme allongée longitudinalement sensiblement parallèlement à une génératrice du rouleau (31, 33), la protection (37) comprend au moins des premier et second profilés (41, 43) longitudinaux présentant respectivement des première et seconde sections différentes l'une de l'autre, **caracterisée en ce que** la protection (37) comprend une âme métallique (39) longitudinale, les profilés (41, 43) étant clipsés sur l'âme métallique (39).

2. Station de support selon la revendication 1, **caractérisée en ce que** les premier et second profilés (41, 43) sont en un matériau plastique.

3. Station de support selon la revendication 1 ou 2, **caractérisée en ce que** les premier et second profilés (41, 43) sont disposés respectivement vers l'extérieur et vers le centre de la station de support (9), et comportent des faces (55, 45) tournées vers la bande (3) respectivement relativement plus large et relativement moins large.

4. Station de support selon la revendication 3, **caractérisée en ce que** les faces (55, 45) tournées vers la bande (3) des premier et second profilés (41, 43) sont séparées du rouleau (33) par des interstices respectivement relativement plus étroit et relativement plus large.

5. Station de support selon l'une quelconque des revendications précédentes, **caractérisée en ce que** chaque profilé (41, 43) présente une face (59, 49) tournée vers le rouleau (33) et un logement (63) de réception de l'âme métallique (39) ouvert sur la face (59, 49) tournée vers le rouleau (33).

6. Station de support selon l'une quelconque des revendications précédentes, **caractérisée en ce que** le châssis (15) comprend deux encoches (67) de support de la protection (37) disposées longitudinalement de part et d'autre de la protection (37), les encoches (67) étant délimitées chacune par un bord périphérique ouvert, les parties d'extrémité (69) opposées de l'âme (39) étant engagées dans les encoches (67).

7. Station de support selon la revendication 6, **caractérisée en ce qu'**au moins une des parties d'extrémité (69) de l'âme (39) fait saillie hors de l'encoche (67) et est pliée par rapport à la direction longitudinale.

8. Station de support selon l'une quelconque des revendications précédentes, **caractérisée en ce que** l'âme métallique (39) est un fer plein de section plate.

9. Station de support selon l'une quelconque des revendications précédentes, **caractérisée en ce que** le berceau (17) comporte au moins un rouleau central (31) et deux rouleaux d'extrémité (33) disposés de part et d'autre du rouleau central (31), les rouleaux (31, 33) étant disposés dans le prolongement les uns des autres, la station comportant pour chacun des deux rouleaux d'extrémité (33) une protection (37) munie de deux profilés longitudinaux (41, 43) de sections différentes l'une de l'autre, et pour chaque rouleau central (31) une protection (35) munie d'un seul profilé (43).

## Claims

1. Support station for a movable belt conveyor, the support station (9) comprising:
- a support cradle (17) for the belt (3), the cradle (17) comprising at least one roller (31, 33) for guiding and supporting the belt. (3) ;
- a frame (15) for supporting the or each roller (31, 33);
- at least one anti-jamming protection means (35, 37) fixed to the frame (15), the protection means (35, 37) being disposed along at least one of the rollers (31, 33) and having an elongate shape longitudinally substantially parallel to a generatrix of the roller (31, 33), the protection means (37) comprising at least first and second longitudinal profile sections (41, 43) having respectively first and second cross-sections different from each other, **characterized in that** the protection means (37) comprises a longitudinal mental core (39), the profile sections (41, 43) being clipped onto the metal core (39).

2. A support station according to claim 1, **characterized in that** the first and second profile sections (41, 43) are made of a plastics material.

3. A support station according to claim 1 or 2, **characterized in that** the first and second profile sections (41, 43) are disposed respectively towards the outside and towards the centre of the support station (9) and have faces (55, 45) turned towards the belt (3) that are respectively relatively wider and relatively less wide.

4. A support station according to claim 3_{;} **characterized in that** the faces (55, 45), turned towards the belt (3), of the first and second profile sections (41, 43) are separated from the roller (33) by gaps that are respectively relatively narrower and relatively wider.

5. A support station according to any one of the preceding claims, **characterized in that** each profile section (41, 43) has a face (59, 49) turned towards the roller (33) and a seat (63) for receiving the metal core (39) open on the face (59, 49) turned towards the roller (33).

6. A support station according to any one of the preceding claims, **characterized in that** the frame (15) comprises two support notches (67) for the protection means (37) that are disposed longitudinally on either side of the protection means (37), the notches (67) being each delimited by an open peripheral edge, the opposed end portions (69) of the core (39) being engaged in the notches (67).

7. A support station according to claim 6, **characterized in that** at least one of the end portions (69) of the core (39) protrudes out of the notch (67) and is bent with respect to the longitudinal direction.

8. A support station according to any one of the preceding claims, **characterized in that** the metal core (39) is a solid iron bar of flat cross-section.

9. A support station according to any one of the preceding claims, **characterized in that** the cradle (17) comprises at least one central roller (31) and two end rollers (33) disposed on either side of the central roller (31) , the rollers (31, 33) being disposed in prolongation of each other, and the station comprising for each of the two end rollers (33) a protection means (37) equipped with two longitudinal profile sections (41, 43) having cross-sections that are different from each other, and for each central roller (31) a protection means (35) equipped with a single profile section (43).

## Patentansprüche

1. Auflagestation für einen beweglichen Bandförderer, wobei die Auflagestation (9) aufweist:
- Ein Auflagegestell (17) für das Band (3), wobei das Gestell (17) mindestens eine Walze (31, 33) zur Führung und Auflage des Bands (3) umfasst;
- ein Traggestell (15) für die oder jede Walze (31, 33);
- mindestens einen am Gestell (15) befestigten Klemmschutz (35, 37),
- wobei der Schutz (35, 37) entlang mindestens einer der Walzen (31, 33) angeordnet ist und eine der Länge nach langgestreckte, zur Mantellinie der Walze (31, 33) im Wesentlichen parallele Farm aufweist, der Schutz (37) mindestens ein erstes und zweites Längsprofil (41, 43) umfasst, die jeweils erste und zweite voneinander unterschiedliche Querschnitte aufweise, **dadurch gekennzeichnet, dass** der Schutz (37) einen längs verlaufenden Metallsteg (39) umfasst, wobei die Profile (41, 43) auf den Metallsteg (39) aufgeclipst sind.

2. Auflagestation nach Anspruch 1, **dadurch gekennzeichnet, dass** das erste und zweite Profil (41, 43) aus einem Kunststottmaterial sind.

3. Auflagestation nach Anspruch 1 oder 2, **dadurch gekennzeichnet, dass** das erste und zweite Profil (41, 43) jeweils zum Äußeren und zur Mitte der Auflagestation (9) hin angeordnet sind und dem Band (3) zugewandte Seiten (55, 45) umfassen, die jeweils relativ breiter und relativ weniger breit sind.

4. Auflagestation nach Anspruch 3, **dadurch gekennzeichnet, dass** die dem Band (3) zugewandten Seiten (55, 45) des ersten und zweiten Profils (41, 43) von der Walze (33) durch jeweils relativ schmälere und relativ breitere Zwischenräume getrennt sind.

5. Auflagestation nach einem der vorhergehenden Ansprüche, **dadurch gekennzeichnet, das** jedes Profil (41, 43) eine der Walze (33) zugewandte Seite (59, 39) und einen Aufnahmesitz (63) für den Metallsteg (39) aufweist, der zu der Seite (59, 49) hin offen ist, die der Walze (33) zugewandt ist.

6. Auflagestation nach einem der vorhergehenden Ansprüche, **dadurch gekennzeichnet, dass** das Gestell (15) zwei Ausklinkungen (67)zur Halterung des Schutzes (37) umfasst, die der Länge nach auf beiden Seiten des Schutzes (37) angeordnet sind, wobei die Ausklinkungen (67) jeweils durch einen offenen umlaufenden Rand begrenzt sind, wobei die entgegengesetzten Endteile (69) des Stegs (39) in die Ausklinkungen (67) eingesteckt sind.

7. Auflagestation nach Anspruch 6, **dadurch gekennzeichnet, dass** mindestens eines der Endteile (69) des Stegs (39) aus der Ausklinkung (67) vorsteht und in Bezug auf die Längsrichtung gebogen ist.

8. Auflagestation nach einem der vorhergehenden Ansprüche, **dadurch gekennzeichnet, dass** der Metallsteg (39) ein massives Eisen mit flachem Querschnitt ist.

9. Auflagestation nach einem der vorhergehenden Ansprüche, **dadurch gekennzeichnet, dass** das Gestell (17) mindestens eine mittlere Walze (31) und zwei auf beiden Seiten der mittleren Walze (31) angeordnete Endwalzen (33) umfasst, wobei die Walzen (31, 33) in deren jeweiligen Verlängerungen angeordnet sind, wobei die Station für jede der beiden Endwalzen (33) einen Schutz (37) umfasst, der mit zwei Längsprofilen (41, 43) mit voneinander unterschiedlichen Querschnitten versehen ist, und für jede Mittelwalze (31) einen Schutz (35), der mit einem einzigen Profil (43) versehen ist.
